# EUROPEAN PATENT SPECIFICATION

(11) **EP 4 501 527 B1**
(45) Date of publication and mention of the grant of the patent: **17.12.2025**
(21) Application number: 24188065.7
(22) Date of filing: 11.07.2024
(51) Int. Cl.: B23K 31/02, F16L 5/02, B23K 101/12, B23K 101/14

(54) **METHOD FOR MANUFACTURING HOT WATER STORAGE TANK**
VERFAHREN ZUR HERSTELLUNG EINES WARMWASSERSPEICHERS
PROCÉDÉ DE FABRICATION D'UN RÉSERVOIR DE STOCKAGE D'EAU CHAUDE

(30) Priority: 01.08.2023 JP 2023125254
(43) Date of publication of application: 05.02.2025
(73) Proprietor: Panasonic Intellectual Property Management Co., Ltd., Kadoma-shi, Osaka 571-0057 (JP)
(72) Inventor: WATANABE, Kenichi, Kadoma-shi, Osaka 571-0057 (JP); AOKI, Masakazu, Kadoma-shi, Osaka 571-0057 (JP); MIYOSHI, Dai, Kadoma-shi, Osaka 571-0057 (JP)
(74) Representative: Eisenführ Speiser

(56) References cited:
- CN-A- 105 004 069
- CN-A- 106 052 469
- US-A- 2 764 427

## Description

### BACKGROUND OF THE INVENTION

### Field of the Invention

The present invention relates to a method for manufacturing a hot water storage tank.

### Description of the Related Art

Japanese Patent Laid-Open No. 2004-257585 discloses a hot water storage tank for a hot-water heating apparatus, the tank including an internal heat exchanger therein.US 2 764 427 A discloses another known method of manufacturing a hot water storage tank.

The present invention provides a welding method with which it is possible to easily weld a heat-exchange intermediate socket and a heat-exchange pipe to an upper head, and thus to suppress corrosion due to a gap.

### SUMMARY OF THE INVENTION

A method for manufacturing a hot water storage tank according to the present invention, the hot water storage tank including a main body, an upper head and a lower head that close an upper end and a lower end of the main body, respectively, an internal heat exchanger accommodated in the main body, and a heat-exchange pipe attached to the upper head via a heat-exchange intermediate socket, having a heat-exchange socket, and allowing a medium to flow toward the internal heat exchanger, includes, in this order: a step of welding the heat-exchange intermediate socket to the heat exchange pipe; a step of welding the heat-exchange socket to the heat-exchange pipe; a step of inserting the heat-exchange pipe into a heat-exchange-pipe attachment hole in the upper head and positioning the heat-exchange intermediate socket; and a step of butt-welding the upper head and the heat-exchange intermediate socket from an outer surface side of the upper head.

### ADVANTAGEOUS EFFECTS OF INVENTION

In the method for manufacturing the hot water storage tank according to the present invention, the step of welding the heat-exchange intermediate socket to the heat-exchange pipe and the step of welding the heat-exchange socket to the heat-exchange pipe are performed before the step of welding the heat-exchange pipe to the upper head. Hence, it is possible to secure the space for the welding operation, and thus to perform the welding operation easily and appropriately when the heat-exchange socket and the heat-exchange intermediate socket are welded to the heat-exchange pipe. Furthermore, because the welding operation can be performed appropriately, it is possible to suppress the occurrence of a gap between the heat-exchange pipe and the heat-exchange intermediate socket. Hence, corrosion due to the gap can be suppressed.

### BRIEF DESCRIPTION OF THE DRAWINGS

Figure 1 is a front view of a hot water storage tank according to a first embodiment;
Figure 2 is a front view showing an upper head and an internal heat exchanger portion of the hot water storage tank according to the first embodiment;
Figure 3 is a front view showing an internal heat exchanger according to the first embodiment;
Figure 4 is a perspective view of the upper head according to the first embodiment;
Figure 5 is a sectional view of a part of the upper head according to the first embodiment;
Figure 6 is a sectional view of the upper head to which the heat-exchange pipe according to the first embodiment is attached;
Figure 7 is a front view of a lower head according to the first embodiment;
Figure 8 is a perspective view showing a water supply pipe according to the first embodiment; and
Figure 9 is a perspective view showing the heat-exchange pipe according to the first embodiment.

### DETAILED DESCRIPTION OF THE PREFERRED EMBODIMENTS

### Underlying Knowledge Forming Basis of Present Invention

When the inventors reached the present invention, with respect to a hot water storage tank for a hot-water heating apparatus, the tank including an internal heat exchanger therein, the following procedure had been proposed to connect an upper head and a heat-exchange pipe to be connected to the internal heat exchanger:
first, a heat-exchange intermediate socket is welded to the upper head. Next, a pipe end of the internal heat exchanger is inserted from the inside of the upper head, and the heat-exchange intermediate socket and the pipe end of the internal heat exchanger are welded together;
subsequently, a heat-exchange socket is welded to the pipe end of the internal heat exchanger located outside the upper head.

In the case of the proposed procedure, because the surface of the upper head is typically formed in a curved shape, when the heat-exchange intermediate socket is welded to the upper head, the heat-exchange intermediate socket needs to be welded along the curved surface of the upper head. Hence, a sufficient space for a welding operation cannot be secured. Furthermore, the heat-exchange socket needs to be welded to the pipe end after the heat-exchange intermediate socket and the pipe end of the internal heat exchanger are welded together. However, also in this case, it is difficult to secure a sufficient space for the welding operation.

Furthermore, because the pipe end of the internal heat exchanger is to be inserted into the welded heat-exchange intermediate socket from the inner side of the upper head, it is required that the inner diameter of the heat-exchange intermediate socket should be larger than the outer diameter of the pipe end, resulted in that a gap occurs between the outer diameter of the pipe end of the internal heat exchanger and the inner diameter of the socket. The inventors have found the problem that corrosion may occur from the gap, and have completed the subject matter of the present disclosure in order to solve the problem.

The present disclosure provides a welding method with which it is possible to easily weld a heat-exchange intermediate socket and a heat-exchange pipe to an upper head, and thus to suppress corrosion due to a gap.

Hereinbelow, an embodiment will be described in detail with reference to the drawings. However, unnecessarily detailed descriptions may be omitted. For example, detailed description of well-known matters or redundant description of substantially the same configuration may be omitted.

The accompanying drawings and the following description are provided for those skilled in the art to fully understand the present disclosure, and are not intended to limit the subject matter described in the claims.

### First Embodiment

Hereinbelow, a first embodiment will be described with reference to the drawings.

### 1-1. Configuration

### 1-1-1. Configuration of Hot Water Storage Tank

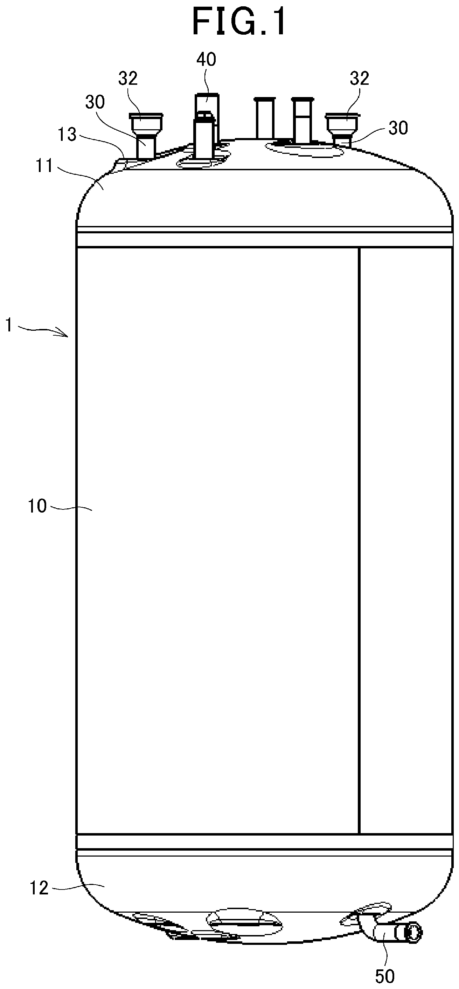

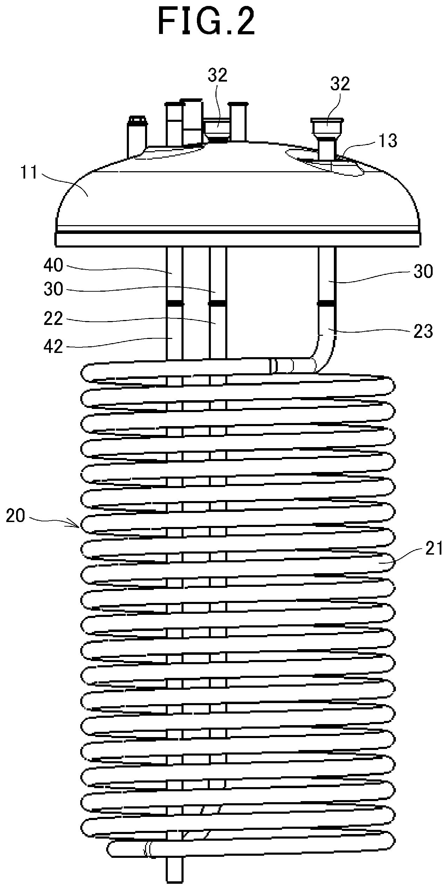

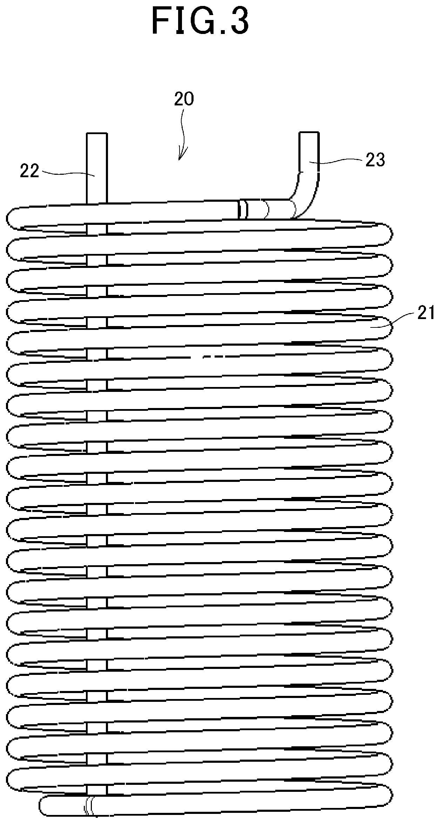

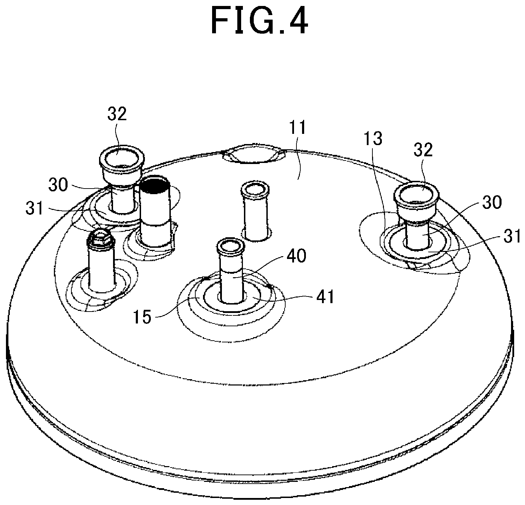

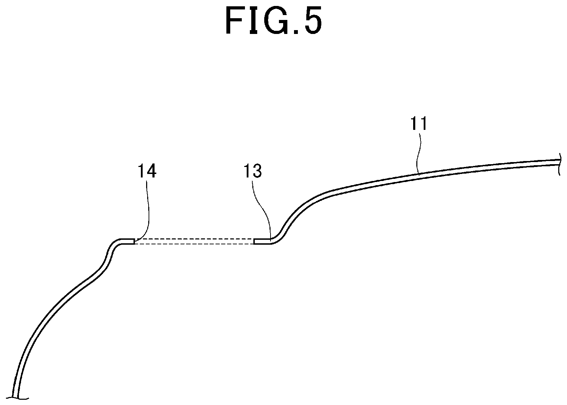

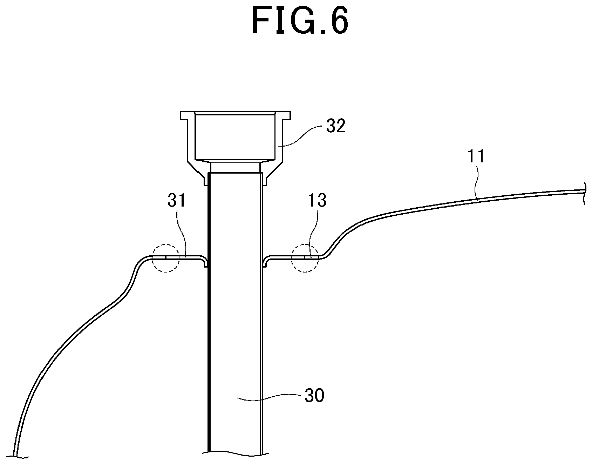

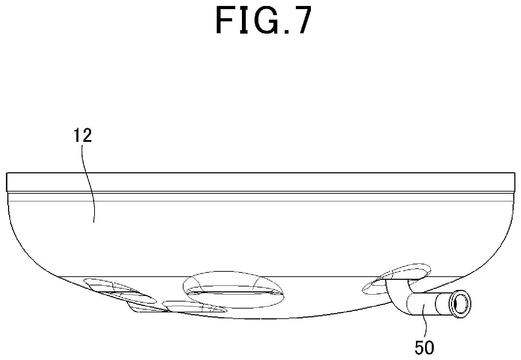

Figure 1 is a front view of a hot water storage tank manufactured by using the welding method of the present disclosure. Figure 2 is a front view showing an upper head and an internal heat exchanger portion of the hot water storage tank according to the first embodiment. Figure 3 is a front view showing the internal heat exchanger according to the first embodiment. Figure 4 is a perspective view of the upper head according to the first embodiment. Figure 5 is a sectional view of a part of the upper head according to the first embodiment. Figure 6 is a sectional view of the upper head to which a heat-exchange pipe according to the first embodiment is attached. Figure 7 is a front view of a lower head according to the first embodiment.

As shown in Figure 1, the hot water storage tank 1 includes a substantially cylindrical main body 10, an upper head 11 that closes an upper end of the main body 10, and a lower head 12 that closes a lower end of the main body 10.

As shown in Figure 2, the main body 10 accommodates an internal heat exchanger 20 that is disposed along the inner circumferential surface of the main body 10.

The internal heat exchanger 20 includes: an internal heat-exchange pipe 21 formed by spirally winding a long pipe along the inner circumferential surface of the main body 10; a medium introduction pipe 22 extending linearly upward from the lower end of the internal heat-exchange pipe 21; and a medium discharge pipe 23 extending upward from the upper end of the internal heat-exchange pipe 21.

By allowing a medium circulating in a medium circuit including a compressor, a condenser, and a medium pipe (not shown) to flow through the medium introduction pipe 22, the internal heat-exchange pipe 21, and the medium discharge pipe 23 in this order, heat exchange between the medium in the internal heat exchanger 20 and the water stored in the hot water storage tank 1 is performed.

Two heat-exchange pipes 30 are provided so as to penetrate through the upper head 11. The upper end of the medium introduction pipe 22 is connected to the lower end of one of the heat-exchange pipes 30. The upper end of the medium discharge pipe 23 is connected to the lower end of the other heat-exchange pipe 30.

As shown in Figures 4, 5, and 6, flat surfaces 13 are formed at portions of the upper head 11 where the two heat-exchange pipes 30 are to be inserted. The flat surfaces 13 are provided with heat-exchange-pipe attachment holes 14 through which the heat-exchange pipes 30 are to be inserted.

A heat-exchange intermediate socket 31, which is to be attached to the flat surface 13, is attached to an intermediate portion of each of the heat-exchange pipes 30 in the axial direction. A heat-exchange socket 32, to which a pipe constituting the medium circulation circuit is connected, is attached to the upper end of each of the heat-exchange pipes 30.

The heat-exchange sockets 32 are formed to have an outer diameter smaller than the outer diameter of the heat-exchange intermediate sockets 31.

The outer diameter of the heat-exchange intermediate sockets 31 is substantially the same as the inner diameter of the heat-exchange-pipe attachment holes 14.

As shown in Figure 3, in the upper head 11, a water supply pipe 40 is provided so as to penetrate through the upper head 11.

A flat surface 15 is formed at a portion of the upper head 11 where the water supply pipe 40 is to be inserted.

A water supply socket 41 to be attached to the flat surface 15 is attached to an intermediate portion of the water supply pipe 40 in the axial direction.

The upper end of a water supplying pipe 42 extending in the upward/downward direction of the main body 10 is connected to the lower end of the water supply pipe 40. The water supplying pipe 42 extends downward with respect to the main body 10, and the lower end of the water supplying pipe 42 is located in the vicinity of the lower head 12.

Furthermore, as shown in Figure 7, a lower water pipe 50, through which water flows, is attached to the lower head 12.

### 1-2. Method for Manufacturing Hot Water Storage Tank

Next, a method for manufacturing the hot water storage tank 1 according to the first embodiment will be described.

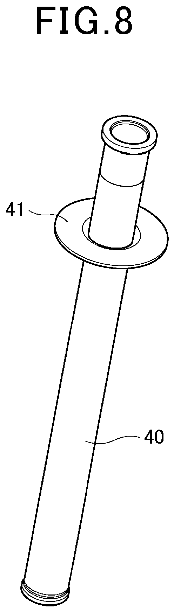

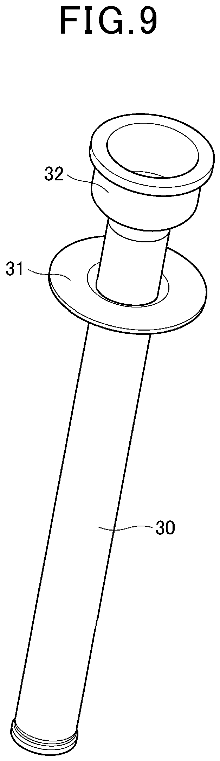

Figure 8 is a perspective view showing the water supply pipe 40 according to the first embodiment. Figure 9 is a perspective view showing the heat-exchange pipe 30 according to the first embodiment.

First, as shown in Figure 8, the water supply pipe 40 and the water supply socket 41 are joined by welding.

Welding of the water supply pipe 40 and the water supply socket 41 can be performed easily when it performed before the water supply pipe 40 is welded to the upper head 11, since that welding can be performed in a secured sufficient space.

Thus, the water supply pipe 40 to which the water supply socket 41 is fixed by welding is obtained.

Next, the heat-exchange pipe 30 and the heat-exchange intermediate socket 31 are joined by welding. By performing welding of the heat-exchange pipe 30 and the heat-exchange intermediate socket 31 before the heat-exchange pipe 30 is welded to the upper head 11, it is possible to secure a sufficient space for the welding operation, and thus to perform the welding operation easily.

Next, the heat-exchange pipe 30 and the heat-exchange socket 32 are joined by welding. Thus, the heat-exchange pipe 30 to which the heat-exchange intermediate socket 31 and the heat-exchange socket 32 are fixed by welding is obtained.

Subsequently, the water supply pipe 40 to which the water supply socket 41 is welded is attached to the upper head 11.

The lower end of the water supply pipe 40 to which the water supply socket 41 is welded is inserted from above the upper head 11, and the water supply socket 41 is positioned with respect to the flat surface 13. In this state, the outer circumferential portion of the water supply socket 41 is butt-welded from the upper surface side of the upper head 11 to fix the water supply socket 41 to the upper head 11.

At this time, because the upper head 11 is provided with the flat surface 15, it is possible to perform welding in a state in which the water supply socket 41 is stably held, and thus to perform welding without leaving a gap.

Next, the heat-exchange pipes 30 to which the heat-exchange sockets 32 and the heat-exchange intermediate sockets 31 are welded are attached to the upper head 11.

As shown in Figure 6, the heat-exchange pipe 30 to which the heat-exchange intermediate socket 31 and the heat-exchange socket 32 are welded is inserted from above the upper head 11, and the heat-exchange intermediate socket 31 is positioned with respect to the heat-exchange-pipe attachment hole 14 formed in the flat surface 13 of the upper head 11.

In this state, the interface (indicated by circles in Figure 6) between the outer circumferential portion of the heat-exchange intermediate socket 31 and the heat-exchange-pipe attachment hole 14 is butt-welded from the upper surface side of the upper head 11 to fix the heat-exchange intermediate socket 31 to the upper head 11.

At this time, because the upper head 11 is provided with the flat surfaces 13, it is possible to perform welding in a state in which the heat-exchange intermediate sockets 31 are stably held, and thus to perform welding without leaving a gap.

In this embodiment, because the heat-exchange sockets 32 are formed to have an outer diameter smaller than the outer diameter of the heat-exchange intermediate sockets 31, the heat-exchange sockets 32 do not serve as an obstacle when the heat-exchange intermediate sockets 31 and the upper head 11 are welded together. Thus, it is possible to secure a large space for the welding operation, and to perform welding easily.

After the water supply pipe 40 and the heat-exchange pipes 30 are fixed to the upper head 11 by welding, the upper end of the medium introduction pipe 22 and the upper end of the medium discharge pipe 23 of the internal heat exchanger 20 are connected to the lower ends of the heat-exchange pipes 30 by welding.

Furthermore, the upper end of the water supplying pipe 42 is connected to the lower end of the water supply pipe 40 by welding.

Next, the lower water pipe 50 is connected to the lower head 12 by welding.

Thereafter, the side portions of the plate-like main body 10 are welded together to form the main body 10 into a cylindrical shape.

Then, the internal heat exchanger 20 is inserted into the main body 10, the upper end of the main body 10 and the upper head 11 are fixed together by welding, and the lower end of the main body 10 and the lower head 12 are fixed together by welding. As described above, in this embodiment, it is possible to perform welding in a state in which a large space for the welding operation is secured in all welding steps.

Through these steps, the hot water storage tank 1 is completed.

### 1-3. Advantageous Effects, etc.

As described above, in the method for manufacturing the hot water storage tank 1 according to this embodiment, the step of welding the heat-exchange intermediate sockets 31 to the heat-exchange pipes 30, the step of welding the heat-exchange sockets 32 to the heat-exchange pipes 30, the step of inserting the heat-exchange pipes 30 into the heat-exchange-pipe attachment holes 14 in the upper head 11 and positioning the heat-exchange intermediate sockets 31, and the step of butt-welding the upper head 11 and the heat-exchange intermediate sockets 31 together from the outer surface side of the upper head 11 are performed in this order.

Because the step of welding the heat-exchange intermediate sockets 31 to the heat-exchange pipes 30 and the step of welding the heat-exchange sockets 32 to the heat-exchange pipes 30 are performed before the step of welding the heat-exchange pipes 30 to the upper head 11, it is possible to secure the space for the welding operation, and thus to perform the welding operation easily and appropriately when the heat-exchange sockets 32 and the heat-exchange intermediate sockets 31 are welded to the heat-exchange pipes 30.

Furthermore, because the welding operation can be performed appropriately, it is possible to suppress the occurrence of a gap between the heat-exchange pipes 30 and the heat-exchange intermediate sockets 31. Hence, corrosion due to the gap can be suppressed.

The method for manufacturing the hot water storage tank 1 according to this embodiment further includes the step of welding the heat-exchange pipes 30 to the medium introduction pipe 22 and the medium discharge pipe 23 (a pipe) of the internal heat exchanger 20 after welding the heat-exchange pipes 30 to the heat-exchange intermediate sockets 31.

Because it is possible to weld the heat-exchange pipes 30 to the upper head 11 before the medium introduction pipe 22 and the medium discharge pipe 23 of the internal heat exchanger 20 are welded to the heat-exchange pipes 30, it is possible to perform the welding operation of the heat-exchange pipes 30 without being obstructed by the internal heat exchanger 20.

In the method for manufacturing the hot water storage tank 1 according to this embodiment, the heat-exchange sockets 32 are formed to have an outer diameter smaller than the outer diameter of the heat-exchange intermediate sockets 31.

Thus, when the heat-exchange intermediate sockets 31 and the upper head 11 are welded together, the heat-exchange sockets 32 do not serve as an obstacle. Thus, it is possible to secure a large space for the welding operation, and to perform welding easily.

In the method for manufacturing the hot water storage tank 1 according to this embodiment, the flat surfaces 13 substantially orthogonal to the axial direction of the main body 10 are formed around the heat-exchange-pipe attachment holes 14 in the upper head 11.

By providing the flat surfaces 13 in the upper head 11, it is possible to perform welding in a state in which the heat-exchange intermediate sockets 31 are stably held, and to perform welding without leaving a gap.

### Other Embodiments

The first embodiment has been described above as an example of the technique disclosed in the present application.
However, the technique in the present disclosure is not limited thereto, and can be applied to embodiments in which changes, replacements, additions, omissions, and the like are made. Furthermore, the components described in the first embodiment may be combined to provide a new embodiment.

In the first embodiment, the heat-exchange intermediate sockets 31 are formed to have an outer diameter substantially the same as the inner diameter of the heat-exchange-pipe attachment holes 14, and the heat-exchange intermediate sockets 31 and the heat-exchange-pipe attachment holes 14 are butt-welded at the interface therebetween to fix the heat-exchange intermediate sockets 31 to the flat portions 13 of the upper head 11. However, the present disclosure is not limited thereto.

For example, the heat-exchange intermediate sockets 31 may be formed to have an outer diameter larger than the inner diameter of the heat-exchange-pipe attachment holes 14, and welding may be performed in a state in which the heat-exchange intermediate sockets 31 are placed on the flat portions 13.

### Configurations Supported by Embodiments Described Above

The embodiments described above support the following configurations.

### Supplement

(Technique 1) A method for manufacturing a hot water storage tank including a main body, an upper head and a lower head that close an upper end and a lower end of the main body, respectively, an internal heat exchanger accommodated in the main body, and a heat-exchange pipe attached to the upper head via a heat-exchange intermediate socket, having a heat-exchange socket, and allowing a medium to flow toward the internal heat exchanger, the method comprising, in this order: a step of welding the heat-exchange intermediate socket to the heat exchange pipe; a step of welding the heat-exchange socket to the heat-exchange pipe; a step of inserting the heat-exchange pipe into a heat-exchange-pipe attachment hole in the upper head and positioning the heat-exchange intermediate socket; and a step of butt-welding the upper head and the heat-exchange intermediate socket from an outer surface side of the upper head.

According to Technique 1, the step of welding the heat-exchange intermediate socket to the heat-exchange pipe and the step of welding the heat-exchange socket to the heat-exchange pipe are performed before the step of welding the heat-exchange pipe to the upper head. Thus, it is possible to secure the space for the welding operation, and thus to perform the welding operation easily and appropriately when the heat-exchange socket and the heat-exchange intermediate socket are welded to the heat-exchange pipe.

Furthermore, because the welding operation can be performed appropriately, it is possible to suppress the occurrence of a gap between the heat-exchange pipe and the heat-exchange intermediate socket. Hence, corrosion due to the gap can be suppressed.

(Technique 2) The method for manufacturing the hot water storage tank according to Technique 1, further comprising a step of welding the heat-exchange pipe and a pipe of the internal heat exchanger after welding the heat-exchange pipe and the heat-exchange intermediate socket.

According to Technique 2, the heat-exchange pipe can be welded to the upper head before the pipe of the internal heat exchanger is welded to the heat-exchange pipe. Thus, it is possible to perform the welding operation of the heat-exchange pipe without being obstructed by the internal heat exchanger.

(Technique 3) The method for manufacturing the hot water storage tank according to Technique 1, wherein the heat-exchange socket is formed to have an outer diameter smaller than an outer diameter of the heat-exchange intermediate socket.

According to Technique 3, when the heat-exchange intermediate socket and the upper head are welded together, the heat-exchange socket does not serve as an obstacle. Thus, it is possible to secure a large space for the welding operation, and to perform welding easily.

(Technique 4) The method for manufacturing the hot water storage tank according to Technique 1, wherein a flat surface substantially orthogonal to an axial direction of the main body is formed around the heat-exchange-pipe attachment hole in the upper head.

According to Technique 4, by providing the flat surface in the upper head, it is possible to perform welding in a state in which the heat-exchange intermediate socket is stably held, and thus to perform welding without leaving a gap.

### INDUSTRIAL APPLICABILITY

The present invention can be suitably applied to a welding method with which it is possible to easily weld a heat-exchange intermediate socket and a heat-exchange pipe to an upper head, and thus to suppress corrosion due to a gap.

### REFERENCE SIGNS LIST

- 1: hot water storage tank
- 10: main body
- 11: upper head
- 12: lower head
- 13: flat surface
- 14: heat-exchange-pipe attachment hole
- 15: flat surface
- 20: internal heat exchanger
- 21: internal heat-exchange pipe
- 22: medium introduction pipe
- 23: medium discharge pipe
- 30: heat-exchange pipe
- 31: heat-exchange intermediate socket
- 32: heat-exchange socket
- 40: water supply pipe
- 41: water supply socket
- 42: water supplying pipe
- 50: lower water pipe

## Claims

1. A method for manufacturing a hot water storage tank (1) including a main body (10), an upper head (11) and a lower head (12) that close an upper end and a lower end of the main body, respectively, an internal heat exchanger (20) accommodated in the main body, and a heat-exchange pipe (30) attached to the upper head via a heat-exchange intermediate socket (31), having a heat-exchange socket (32), and allowing a medium to flow toward the internal heat exchanger, the method **characterized by** comprising, in this order:
a step of welding the heat-exchange intermediate socket to the heat exchange pipe;
a step of welding the heat-exchange socket to the heat-exchange pipe;
a step of inserting the heat-exchange pipe into a heat-exchange-pipe attachment hole (14) in the upper head and positioning the heat-exchange intermediate socket; and
a step of butt-welding the upper head and the heat-exchange intermediate socket from an outer surface side of the upper head.

2. The method for manufacturing the hot water storage tank according to claim 1, further comprising a step of welding the heat-exchange pipe and a pipe of the internal heat exchanger after welding the heat-exchange pipe and the heat-exchange intermediate socket.

3. The method for manufacturing the hot water storage tank according to claim 1, wherein the heat-exchange socket is formed to have an outer diameter smaller than an outer diameter of the heat-exchange intermediate socket.

4. The method for manufacturing the hot water storage tank according to claim 1, wherein a flat surface (13) substantially orthogonal to an axial direction of the main body is formed around the heat-exchange-pipe attachment hole in the upper head.

## Patentansprüche

1. Verfahren zum Herstellen eines Warmwasserspeichers (1), der einen Hauptkörper (10), einen oberen Kopf (11) und einen unteren Kopf (12), die ein oberes bzw. ein unteres Ende des Hauptkörpers verschließen, einen in dem Hauptkörper untergebrachten inneren Wärmetauscher (20) und ein Wärmetauscherrohr (30) umfasst, das über eine Wärmetauscher-Zwischenbuchse (31) an dem oberen Kopf angebracht ist, eine Wärmetauscherbuchse (32) aufweist und ermöglicht, dass ein Medium in Richtung zum inneren Wärmetauscher strömt, wobei das Verfahren **dadurch gekennzeichnet ist, dass** es, in dieser Reihenfolge, umfasst:
einen Schritt des Verschweißens der Wärmetauscher-Zwischenbuchse mit dem Wärmetauscherrohr;
einen Schritt des Verschweißens der Wärmetauscherbuchse mit dem Wärmetauscherrohr;
einen Schritt des Einsetzens des Wärmetauscherrohrs in ein Wärmetauscherrohr-Befestigungsloch (14) im oberen Kopf und des Positionierens der Wärmetauscher-Zwischenbuchse; und
einen Schritt des Stumpfschweißens des oberen Kopfes und der Wärmetauscher-Zwischenbuchse von einer äußeren Oberflächenseite des oberen Kopfes.

2. Verfahren zum Herstellen des Warmwasserspeichers nach Anspruch 1, das ferner einen Schritt umfasst, bei dem das Wärmetauscherrohr und ein Rohr des inneren Wärmetauschers nach dem Verschweißen des Wärmetauscherrohrs und der Wärmetauscher-Zwischenbuchse verschweißt werden.

3. Verfahren zum Herstellen des Warmwasserspeichers nach Anspruch 1, wobei die Wärmetauscherbuchse so ausgebildet ist, dass sie einen Außendurchmesser aufweist, der kleiner ist als ein Außendurchmesser der Wärmetauscher-Zwischenbuchse.

4. Verfahren zum Herstellen des Warmwasserspeichers nach Anspruch 1, wobei eine ebene Fläche (13), die im Wesentlichen orthogonal zu einer axialen Richtung des Hauptkörpers verläuft, um das Wärmetauscherrohr-Befestigungsloch im oberen Kopf ausgebildet ist.

## Revendications

1. Procédé de fabrication d'un réservoir de stockage (1) d'eau chaude comprenant un corps principal (10), une tête supérieure (11) et une tête inférieure (12) qui ferment respectivement une extrémité supérieure et une extrémité inférieure du corps principal, un échangeur de chaleur interne (20) logé dans le corps principal et un tuyau d'échange de chaleur (30) fixé à la tête supérieure par l'intermédiaire d'une emboîture intermédiaire d'échange de chaleur (31), présentant une emboîture d'échange de chaleur (32) et permettant à un agent de s'écouler vers l'échangeur de chaleur interne, le procédé étant **caractérisé en ce qu'**il comprend, dans cet ordre :
une étape de soudage de l'emboîture intermédiaire d'échange de chaleur au tuyau d'échange de chaleur ;
une étape de soudage de l'emboîture d'échange de chaleur au tuyau d'échange de chaleur ;
une étape d'insertion du tuyau d'échange de chaleur dans un trou d'attache (14) de tuyau d'échange de chaleur dans la tête supérieure et de positionnement de l'emboîture intermédiaire d'échange de chaleur ; et
une étape de soudage bout à bout de la tête supérieure et de l'emboîture intermédiaire d'échange de chaleur à partir d'un côté de surface externe de la tête supérieure.

2. Procédé de fabrication du réservoir de stockage d'eau chaude selon la revendication 1, comprenant en outre une étape de soudage du tuyau d'échange de chaleur et d'un tuyau de l'échangeur de chaleur interne après soudage du tuyau d'échange de chaleur et de l'emboîture intermédiaire d'échange de chaleur.

3. Procédé de fabrication du réservoir de stockage d'eau chaude selon la revendication 1, l'emboîture d'échange de chaleur étant formée pour présenter un diamètre externe inférieur à un diamètre externe de l'emboîture intermédiaire d'échange de chaleur.

4. Procédé de fabrication du réservoir de stockage d'eau chaude selon la revendication 1, une surface plate (13) sensiblement orthogonale à une direction axiale du corps principal étant formée autour du trou d'attache de tuyau d'échange de chaleur dans la tête supérieure.
